(19) **Europäisches Patentamt / European Patent Office / Office européen des brevets**

(11) **EP 3 827 512 B1**

(12) **FASCICULE DE BREVET EUROPEEN**

(45) Date de publication et mention de la délivrance du brevet:
**23.11.2022 Bulletin 2022/47**

(21) Numéro de dépôt: **19736397.1**

(22) Date de dépôt: **10.07.2019**

(51) Classification Internationale des Brevets (IPC):
***H02P 9/48*** (2006.01)   ***H02P 9/10*** (2006.01)

(52) Classification Coopérative des Brevets (CPC):
**H02P 9/48; H02P 9/10**

(86) Numéro de dépôt international:
**PCT/EP2019/068481**

(87) Numéro de publication internationale:
**WO 2020/020636 (30.01.2020 Gazette 2020/05)**

(54) **SYTEME DE GENERATION D'ENERGIE ELECTRIQUE ET PROCEDE DE REGULATION D'UN SYSTEME DE GENERATION D'ENERGIE ELECTRIQUE POUR UN RESEAU DE DISTRIBUTION ELECTRIQUE D'UN AERONEF**

SYSTEM ZUR STROMERZEUGUNG UND VERFAHREN ZUR STEUERUNG EINES SYSTEMS ZUR STROMERZEUGUNG FÜR EIN STROMVERTEILUNGSNETZ EINES FLUGZEUGES

SYSTEM FOR GENERATING ELECTRIC POWER AND METHOD FOR CONTROLLING A SYSTEM FOR GENERATING ELECTRIC POWER FOR A POWER DISTRIBUTION NETWORK OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2018 FR 1856988**

(43) Date de publication de la demande:
**02.06.2021 Bulletin 2021/22**

(73) Titulaire: **Safran Electrical & Power**
**31702 Blagnac (FR)**

(72) Inventeur: **MICHAUD, Benoit**
**31702 BLAGNAC (FR)**

(74) Mandataire: **Argyma**
**14 Boulevard de Strasbourg**
**31000 Toulouse (FR)**

(56) Documents cités:
**US-A- 4 937 723**     **US-A1- 2007 108 771**
**US-A1- 2017 309 090**

**Description**

## DOMAINE TECHNIQUE GENERAL ET ART ANTERIEUR

La présente invention concerne le domaine de l'alimentation électrique d'un aéronef et, plus particulièrement, un système de génération électrique à partir d'un couple mécanique reçu par une turbomachine de l'aéronef.

De manière traditionnelle, une turbomachine d'aéronef comporte une boite à accessoires, connue de l'homme du métier sous son acronyme anglais AGB pour « Auxiliary Gear Box », qui permet de prélever de la puissance mécanique sur un arbre de la turbomachine pour la convertir en énergie électrique afin d'alimenter un réseau de distribution électrique de l'aéronef.

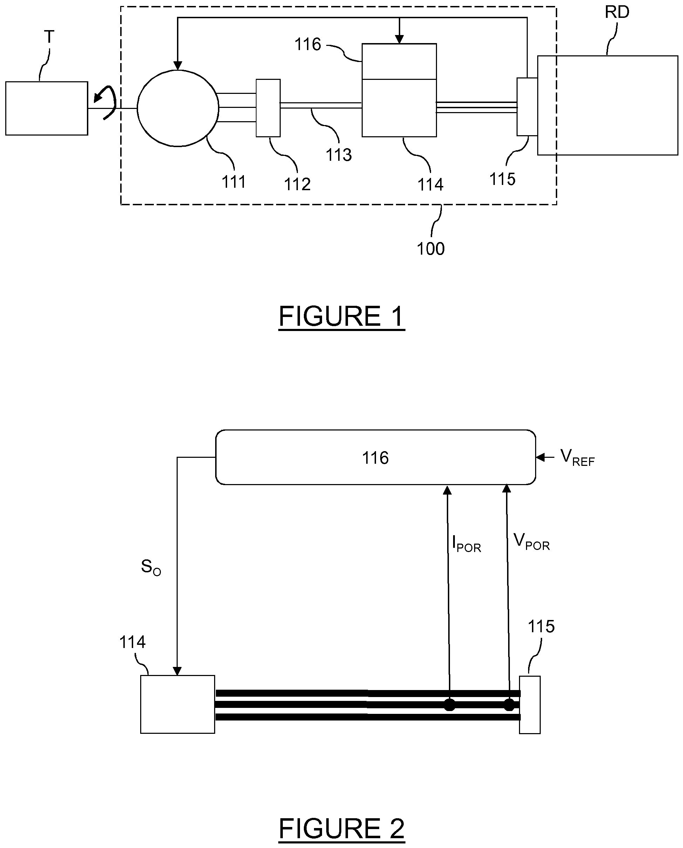

En référence à la figure 1, il est représenté un système de génération d'énergie électrique 100 pour un réseau de distribution RD d'un aéronef par exemple 115V ou 230V. Le système de génération d'énergie électrique 100 comprend une génératrice 111 configurée pour recevoir un couple mécanique de la turbomachine T et fournir une tension électrique dont la fréquence est fonction de la vitesse de rotation. Afin de fournir au réseau de distribution une tension alternative d'amplitude et de fréquence constante malgré une vitesse de rotation variable, il est connu d'utiliser un système de génération d'énergie électrique 100 connu sous son acronyme anglais VSCF pour « Variable Speed Constant Frequency ». Un tel système de génération d'énergie électrique permet de fournir une amplitude et une fréquence de sortie constante malgré une entrée variable (vitesse de rotation de la turbomachine T).

En pratique, toujours en référence à la figure 1, le système de génération d'énergie électrique 100 comprend :

- une génératrice synchrone 111 à excitation commandée adaptée pour recevoir un couple mécanique d'une turbomachine T de l'aéronef et adaptée pour générer une tension électrique,
- un redresseur 112 placé en sortie de la génératrice synchrone 111,
- un onduleur 114 produisant une tension triphasée à fréquence fixe,
- un bus de tension continue 113 reliant le redresseur 112 à l'onduleur 114 et
- un point de régulation 115, connu de l'homme du métier sous la désignation anglaise « Point Of Régulation », qui est placé en sortie de l'onduleur 114.

Dans cet exemple, la génératrice 111 fonctionne en mode synchrone après démarrage et allumage de la turbomachine. La génératrice 111 possède un inducteur rotorique et des enroulements statoriques qui fournissent une tension alternative triphasée. La tension alternative triphasée est transportée sous forme d'une tension continue par le bus de tension 113 puis convertie de nouveau en tension alternative triphasée par l'onduleur 114 pour être fournie au point de régulation 115.

Afin de fournir une tension de sortie de fréquence constante et d'amplitude constante au point de régulation 115, le système de génération d'énergie électrique 1 comporte de manière connue une unité électronique 116 comprenant deux parties. La première partie est configurée pour contrôler la génératrice 111, connue de l'homme du métier sous la désignation anglaise « Generator Control Unit » ou GCU et la seconde partie est configurée pour contrôler l'onduleur 114. Une telle unité électronique est connue, par exemple, par la demande de brevet EP0376728A2.

En pratique, l'unité électronique 116 fait varier le courant continu d'excitation de manière à contrôler la tension continue du bus 113

De plus, en référence à la figure 2, l'unité électronique 116 mesure la valeur des tensions de sortie $V_{POR}$ au point de régulation 115 et les compare aux tensions de référence prédéterminées $V_{REF}$ qui sont attendues par le point de régulation 115. De même, l'unité électronique 116 mesure la valeur des intensités de sortie $I_{POR}$ au point de régulation 115 et les compare à des intensités de référence prédéterminées afin de limiter les courants de court-circuit.

En cas d'écart, l'unité électronique 116 modifie le signal de régulation SO de l'onduleur 114 afin que celui-ci adapte la régulation de la tension triphasée à fréquence fixe. Suite à la réception du signal de régulation SO, les tensions de sortie VPOR sont proches des tensions de référence VREF du point de régulation 115. Autrement dit, l'unité électronique 116 permet de réguler les tensions de sortie VPOR au point de régulation 115 en contrôlant le paramétrage de l'onduleur 114 (fréquence de commutation, temps de conduction des interrupteurs ou des semiconducteurs, etc.).

Dans la demande de brevet EP0376728A2, la tension continue du bus 113 est optimisée. Néanmoins, l'amplitude et la phase de la tension de sortie au point de régulation 115 ne sont pas contrôlées de manière précise, en particulier, lorsque la charge du réseau est déséquilibrée, l'onduleur 114 possédant un gain constant.

Par ailleurs, on connaît par l'article « VSCF Aircraft Electric Power System Performance with Active Power Filters » IEEE 978-1-4244-5692-5, un système configuré, d'une part, pour régler le gain de l'onduleur et, d'autre part, pour imposer une tension continue fixe fournie par la génératrice. En fonctionnement normal, une tension continue élevée est nécessaire pour fournir la puissance lors des surcharges ou de court-circuit, et il en résulte des pertes de commutation importantes dans l'onduleur. Ces pertes de commutation entrainent la génération de chaleur par effet Joule qu'il est nécessaire de dissiper. Aussi, de manière connue, le système de génération d'énergie électrique comporte un ou plusieurs organes de dissipation thermique qui pénalisent fortement la masse du système de génération d'énergie électrique, ce qui présente un inconvénient. Par ailleurs, en fonctionnement critique, par exemple lors d'un court-circuit du système de génération d'énergie électrique, la génératrice doit être dimensionnée pour fournir le courant de court-circuit. Aussi, en pratique, la génératrice est surdimensionnée par rapport à son fonctionnement normal, ce qui augmente la complexité et la masse du système de génération d'énergie électrique.

Dans ce cas, avec une tension continue élevée, l'ondulation de tension en sortie de l'onduleur sera plus forte et nécessitera un filtrage plus important, donc un surplus de masse des composants passifs de filtrage LC qui forment jusqu'à un tiers de la masse de l'onduleur.

Pour améliorer la régulation des tensions de sortie, plusieurs propositions ont déjà été proposées dans l'art antérieur. Dans un cas particulier, pour alimenter plusieurs moteurs et non un réseau électrique, il a été proposé par la demande de brevet WO2012123663 de réguler de manière indépendante les tensions de sortie de la génératrice synchrone en fonction de la vitesse de rotation des moteurs. Une telle solution technique n'est pas transposable pour alimenter électriquement un réseau électrique qui doit fournir une tension de sortie constante et indépendante des charges et de leurs caractéristiques.

De manière incidente, on connaît par la demande de brevet US4937723A un système de génération d'énergie VSCF dans lequel l'onduleur et la génératrice sont régulés de manière indépendante à partir de variables différentes. En particulier, la génératrice n'est régulée qu'à partir de mesures de tension.

L'invention a donc pour but de remédier à ces inconvénients en proposant un nouveau procédé de régulation d'un système de génération d'énergie électrique afin d'améliorer la précision de contrôle et d'optimiser la masse des moyens de dissipation et de filtrage de l'onduleur ainsi que la masse de la génératrice.

## PRESENTATION GENERALE DE L'INVENTION

A cet effet, l'invention concerne un procédé de régulation d'un système de génération d'énergie électrique pour un réseau de distribution électrique d'un aéronef, le système de génération d'énergie électrique comprenant :

- une génératrice synchrone à excitation commandée adaptée pour recevoir un couple mécanique d'une turbomachine de l'aéronef et adaptée pour générer une tension électrique selon plusieurs phases,
- un redresseur placé en sortie de la génératrice synchrone,
- un onduleur produisant une tension selon plusieurs phases à fréquence fixe,
- un bus de tension continue reliant le redresseur à l'onduleur,

- un point de régulation placé en sortie de l'onduleur afin de fournir une tension constante en fréquence et en amplitude au réseau de distribution
- procédé de régulation comprenant :

    i. une étape de correction dans laquelle une tension de sortie $V_{POR}$ au point de régulation est comparée à une tension de référence prédéterminée $V_{REF}$ du réseau de distribution et une intensité de sortie $I_{POR}$ au point de régulation est comparée à une intensité de référence prédéterminée $I_{REF}$ du réseau de distribution de manière à déterminer au moins une grandeur de correction GC,
    ii. une étape de détermination d'un signal de régulation So de l'onduleur à partir de la grandeur de correction déterminée GC,
    iii. une étape de détermination d'un signal de régulation $S_G$ de la génératrice à partir de la grandeur de correction déterminée GC et
    iv. une étape de transmission des signaux de régulation So, $S_G$ à l'onduleur et à la génératrice respectivement.

Grâce à l'invention, la génératrice est régulée en utilisant la grandeur de correction, déterminée par la boucle de régulation de tension et la boucle de régulation de courant, utilisée pour déterminer un signal de régulation de l'onduleur. Une telle régulation est particulièrement avantageuse étant donné que la grandeur de correction forme une image des paramètres de la charge vue par la génératrice, ce qui permet d'optimiser la tension continue du bus et ainsi réduire les pertes. De manière avantageuse, la régulation de la génératrice est réalisée à partir de données issues des boucles de régulation de tension et de courant de l'onduleur.

De manière avantageuse, on obtient une meilleure précision grâce au contrôle des tensions de phase par l'onduleur. En outre, la masse des moyens de dissipation et de filtrage de l'onduleur est optimisée du fait du contrôle de la tension continue fournie par la génératrice.

De préférence, le signal de régulation $S_G$ de la génératrice se présente sous la forme d'un courant d'excitation de la génératrice. Ainsi, les effets d'induction sont modifiés dans la génératrice pour adapter la tension du bus.

De manière préférée, la grandeur de correction est déterminée en fonction de l'intensité de sortie $I_{POR}$ au point de régulation.

De préférence, le point de régulation comprenant trois branches, une grandeur de correction $GC_1$, $GC_2$, $GC_3$ est déterminée pour chacune des branches par comparaison de la tension de sortie $V_{POR1}$, $V_{POR2}$, $V_{POR3}$ d'une branche déterminée au point de régulation à une tension de référence prédéterminée $V_{REF1}$, $V_{REF2}$, $V_{REF3}$ du réseau de distribution pour la branche déterminée.

Une grandeur de correction par branche de sortie permet de déterminer un signal de régulation SO de l'onduleur qui comporte trois composantes afin de réguler de manière indépendante chacune des branches de l'onduleur. La régulation de l'onduleur est précise, ce qui améliore la qualité de la tension fournie au point de régulation.

De manière préférée, pour déterminer le signal de régulation $S_G$ de la génératrice, le procédé comporte :

- une étape de sélection de la grandeur de correction maximale $GC_{MAX}$ parmi les grandeurs de correction $GC_1$, $GC_2$, $GC_3$ déterminées pour chacune des branches,
- une étape de comparaison de la grandeur de correction maximale $GC_{MAX}$ à une consigne de référence $GC_{REF}$ afin de déterminer un écart $\Delta GC$,
- une étape de calcul d'un signal de régulation brut $S_{G1}$ en fonction de l'écart déterminé $\Delta GC$ et
- une étape de détermination du signal de régulation $S_G$ de la génératrice en fonction du signal de régulation brut $S_{G1}$.

La sélection de la grandeur de correction maximale $GC_{MAX}$ permet de se placer dans le cas le plus critique, c'est-à-dire, dans le cas où la consigne la plus forte correspond à la phase alimentant la charge la plus forte. La consigne de référence $GC_{REF}$ est déterminée de manière à correspondre à une consigne optimale pour réguler l'onduleur tout en conservant une marge suffisante pour fournir la tension au point de régulation lors des variations transitoires de la charge. Ainsi, tout écart par rapport à cette consigne entraîne une régulation de la génératrice afin de s'adapter aux besoins de l'onduleur.

Selon un aspect de l'invention, le signal de régulation brut $S_{G1}$ de la génératrice est déterminé par intégration de l'écart déterminé $\Delta GC$.

Selon un autre aspect de l'invention, le signal de régulation $S_G$ est bridé en fonction d'un seuil de court-circuit prédéterminé $S_1$. Un tel bridage permet de protéger la génératrice et éviter la génération d'un courant de court-circuit par la génératrice. Cela permet avantageusement d'éviter un surdimensionnement de la génératrice comme dans l'art antérieur.

De préférence, pour déterminer le signal de régulation $S_G$ de la génératrice, le procédé comporte :

- une étape de limitation du signal de régulation brut $S_{G1}$ en fonction d'un seuil de référence $UDC_{REF}$ du bus afin d'obtenir un signal de régulation limité $S_{G2}$,
- une étape de comparaison d'un signal de régulation limité $S_{G2}$, à une mesure de la tension UDCt du bus afin de déterminer un écart $\Delta UDC$,
- une étape de calcul d'un signal de régulation affiné $S_{G3}$ en fonction de l'écart déterminé $\Delta UDC$ et
- une étape de détermination du signal de régulation $S_G$ de la génératrice en fonction du signal de régulation affiné $S_{G3}$.

L'utilisation du seuil de référence $UDC_{REF}$ permet de limiter de manière paramétrable la génératrice et, par conséquent, la tension du bus. Celle-ci est ainsi limitée pour être la plus faible possible en fonction des besoins de manière à limiter les pertes de commutation dans l'onduleur en cas de court-circuit ou de sur-courant sur le réseau électrique. L'onduleur peut alors posséder une masse réduite étant donné qu'il nécessite moins de moyens de dissipation de la chaleur. Un tel seuil de référence permet de limiter la puissance et donc la défaillance d'un composant en cas de surcharge.

De manière préférée, le seuil de référence $UDC_{REF}$ du bus de tension est déterminé en fonction de l'état de l'onduleur, en particulier, de l'intensité maximale de l'onduleur. De préférence, le seuil de référence $UDC_{REF}$ du bus de de tension est déterminé de manière dynamique. Selon un aspect préféré, le seuil de référence $UDC_{REF}$ est défini par la formule suivante :

$$UDC_{REF} = \frac{2 \times \sqrt{2}}{3} \times \frac{S}{I} \times \frac{1}{Ref\_cons} + \varepsilon$$

dans laquelle

- S est la puissance apparente maximum du système de génération électrique
- I est le courant efficace maximum mesuré dans l'onduleur
- $\varepsilon$ est la chute de tension dans l'onduleur.

Un tel seuil de référence permet de paramétrer de manière précise et réactive la limitation du signal de régulation $S_G$ de la génératrice.

Selon un aspect de l'invention, des coordonnées directes, indirectes et homopolaires des courants et des tensions issues des transformées de Clark, Park ou Fortescue sont utilisées dans le procédé de régulation.

L'invention concerne également un système de génération d'énergie électrique pour un réseau de distribution électrique d'un aéronef, le système de génération d'énergie électrique comprenant :

- une génératrice synchrone à excitation commandée adaptée pour recevoir un couple mécanique d'une turbomachine de l'aéronef et adaptée pour générer une tension électrique selon plusieurs phases,
- un redresseur placé en sortie de la génératrice synchrone,
- un onduleur produisant une tension selon plusieurs phases à fréquence fixe,
- un bus de tension continue reliant le redresseur à l'onduleur,
- un point de régulation placé en sortie de l'onduleur afin de fournir une tension constante en fréquence et en amplitude au réseau de distribution et
- une unité électronique de régulation, reliant le point de régulation à l'onduleur et à la génératrice, l'unité électronique de régulation comprenant :

i. un module de correction configuré pour comparer une tension de sortie $V_{POR}$ au point de régulation à une tension de référence $V_{REF}$ du réseau de distribution et pour comparer une intensité de sortie $I_{POR}$ au point de régulation est comparée à une intensité de référence prédéterminée $I_{REF}$ du réseau de distribution de manière à déterminer au moins une grandeur de correction GC,
ii. un premier module de détermination d'un signal de régulation So de l'onduleur à partir de la grandeur de correction déterminée GC et
iii. un deuxième module de détermination d'un signal de régulation $S_G$ de la génératrice à partir de la grandeur de correction déterminée GC.

## PRESENTATION DES FIGURES

L'invention sera mieux comprise à la lecture de la description qui va suivre, donnée uniquement à titre d'exemple, et se référant aux dessins annexés sur lesquels :

- la figure 1 est une représentation schématique d'un système de génération d'énergie électrique selon l'art antérieur pour alimenter un réseau de distribution électrique d'un aéronef,
- la figure 2 est une représentation schématique d'un procédé de régulation d'un onduleur selon l'art antérieur,
- la figure 3 est une représentation schématique d'un système de génération d'énergie électrique selon l'invention pour alimenter un réseau de distribution électrique d'un aéronef,
- la figure 4 est une représentation schématique d'un procédé de régulation d'un système de génération d'énergie électrique selon l'invention,
- la figure 5 est une représentation schématique des étapes du procédé de régulation d'un système de génération d'énergie électrique selon l'invention,
- la figure 6 est une représentation schématique d'un procédé de régulation de chacune des branches de l'onduleur du système de génération,
- la figure 7 est une représentation schématique d'un procédé de régulation de la génératrice du système de génération selon un premier exemple de mise en oeuvre,
- la figure 8 est une représentation schématique d'un procédé de régulation de la génératrice du système de génération selon un deuxième exemple de mise en oeuvre et
- la figure 9 est une représentation schématique d'un procédé de régulation de la génératrice du système de génération selon un troisième exemple de mise en oeuvre.

Il faut noter que les figures exposent l'invention de manière détaillée pour mettre en oeuvre l'invention, lesdites figures pouvant bien entendu servir à mieux définir l'invention le cas échéant.

## DESCRIPTION D'UN OU PLUSIEURS MODES DE REALISATION ET DE MISE EN OEUVRE

Il va dorénavant être présenté un système de génération d'énergie électrique 1 pour un réseau de distribution électrique RD d'un aéronef, par exemple 115V ou 230V, ainsi qu'un procédé de régulation dudit système de génération d'énergie électrique 1. Dans cet exemple, l'aéronef comporte une ou plusieurs turbomachines T participant à la propulsion de l'aéronef.

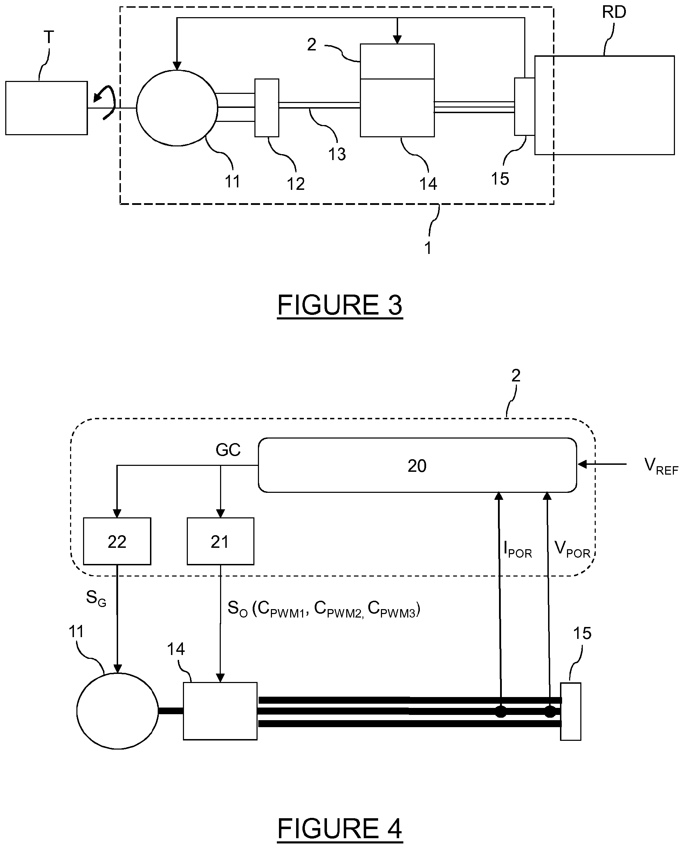

En référence à la figure 3, le système de génération d'énergie électrique 1 comporte :

- une génératrice synchrone 11 adaptée pour recevoir un couple mécanique d'une turbomachine T de l'aéronef et adaptée pour générer une tension électrique,
- un redresseur 12 placé en sortie de la génératrice synchrone 11,
- un onduleur 14 produisant une tension triphasée à fréquence fixe
- un bus de tension continue 13 reliant le redresseur 12 à l'onduleur 14, et
- un point de régulation 15, connu de l'homme du métier sous la désignation anglaise « Point Of Régulation », qui est placé en sortie de l'onduleur 14.

Le point de régulation 15 permet de servir de référence à la régulation du réseau de distribution électrique RD. Les tensions et les courants de référence sont mesurés de manière connue au point de régulation 15.

La génératrice synchrone 11 est adaptée pour recevoir un couple mécanique d'une turbomachine T de l'aéronef et est adaptée pour générer une tension électrique triphasée. Autrement dit, la génératrice synchrone 11 comporte trois branches de sortie fournissant chacune une tension alternative en fonction du couple mécanique reçu en entrée par la turbomachine T. Il va de soi que l'invention s'applique également pour une tension répartie sur plus de trois phases.

La génératrice synchrone 11 est adaptée pour recevoir en entrée un signal de régulation $S_G$, ici un courant d'excitation, afin d'adapter la tension électrique triphasée de sortie. La génératrice synchrone 11 est dite « à excitation commandée ». De manière connue, un tel courant d'excitation permet de modifier les paramètres de conversion de l'énergie mécanique en énergie électrique. Lorsque la génératrice synchrone 11 se présente sous la forme d'une génératrice synchrone bobinée, le courant d'excitation permet de modifier les rapports d'induction dans la génératrice synchrone 11 afin de régler l'amplitude des tensions de sortie. La structure d'une génératrice synchrone 11 est connue de l'homme du métier et ne sera pas détaillée par la suite.

Le redresseur 12 permet de convertir une tension alternative triphasée en une tension continue. Autrement dit, le redresseur 12 comporte trois branches d'entrée afin de fournir une tension continue en sortie. Dans cette forme de réalisation, le redresseur 12 se présente sous la forme d'un équipement qui est indépendant de la génératrice 11. Néanmoins, il va de soi que le redresseur 12 et la génératrice 11 pourraient être intégrés dans un seul et même équipement.

L'onduleur 14 permet de convertir une tension continue en une tension alternative triphasée. Autrement dit, l'onduleur 14 comporte trois branches de sortie fournissant chacune une tension alternative en fonction de la tension continue en entrée. De manière connue, l'onduleur 14 comporte, au niveau de sa sortie, des moyens de filtrage du type LC dont la masse peut représenter jusqu'à un tiers de la masse de l'onduleur 14. Il va de soi que l'invention s'applique également pour une tension répartie sur plus de trois phases.

L'onduleur 14 est adapté pour recevoir en entrée un signal de régulation So afin d'adapter la tension électrique triphasée de sortie. De manière connue, un tel signal de régulation So permet de modifier les paramètres de conversion de la tension continue en tension alternative. A titre d'exemple, lorsque l'onduleur 14 comporte une pluralité de transistors, le signal de commande So permet de modifier les rapports cycliques de commutation des transistors (fréquence, etc.) afin de régler notamment l'amplitude, la fréquence ou la phase des tensions de sortie. La structure d'un onduleur 14 est connue de l'homme du métier et ne sera pas détaillée par la suite.

De manière préférée, le signal de commande So se présente sous la forme d'un signal à modulation de largeur d'impulsions, plus connu sous son abréviation anglaise « PWM » pour « Pulse Width Modulation ». En fonction des impulsions reçues, le comportement de l'onduleur 14 peut être avantageusement modifié.

Le bus de tension continue 13, ou bus DC pour « Direct Current », permet de relier le redresseur 12 à l'onduleur 14 au moyen d'uniquement deux câbles électriques au lieu de trois si chaque phase de la tension était conduite de manière indépendante. L'utilisation d'un bus 13 est particulièrement avantageuse dans le contexte aéronautique étant donné que le redresseur 12 est situé à proximité d'une turbomachine T monté sous une aile de l'aéronef tandis que l'onduleur 14 est situé dans l'habitacle à proximité du réseau de distribution RD à alimenter. La longueur et la section étant grandes, limiter le nombre de câbles électriques permet de réduire la masse et le coût.

En référence aux figures 3 et 4, le système de génération d'énergie électrique 1 comporte une unité électronique de régulation 2, reliant le point de régulation 15 à l'onduleur 14 et à la génératrice 11. Comme illustré à la figure 4, l'unité électronique de régulation 2 comprend :

- un module de correction 20 configuré pour comparer une tension de sortie $V_{POR}$ au point de régulation 15 à une tension de référence $V_{REF}$ du réseau de distribution RD de manière à déterminer au moins une grandeur de correction GC,
- un premier module de détermination 21 d'un signal de régulation So de l'onduleur 14 en fonction de la grandeur de correction déterminée GC et
- un deuxième module de détermination 22 d'un signal de régulation $S_G$ de la génératrice 11 en fonction de la grandeur de correction déterminée GC.

Autrement dit, contrairement à l'art antérieur, la régulation de l'onduleur 14 et de la génératrice 11 s'appuient sur une même grandeur de correction déterminée GC par la boucle de régulation de tension et la boucle de régulation de courant de l'onduleur 14.

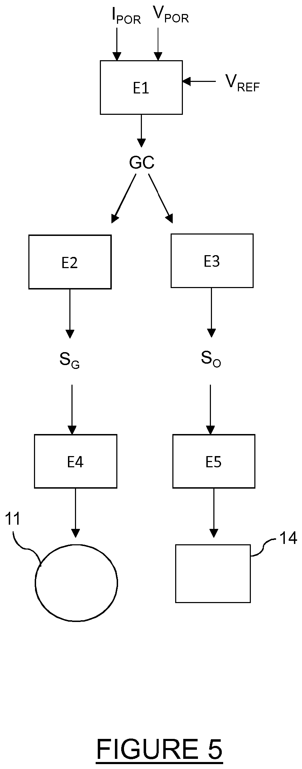

Il va dorénavant être présenté plusieurs exemples de mise en oeuvre d'un procédé de régulation du système de génération d'énergie électrique 1 selon l'invention de manière à fournir en sortie du point de régulation 15 des tensions électriques qui soient sensiblement égales aux tensions électriques de référence attendues par le réseau de distribution RD. L'unité électronique de régulation 2 permet de mettre en œuvre le procédé de régulation dont les étapes sont illustrées à la figure 5.

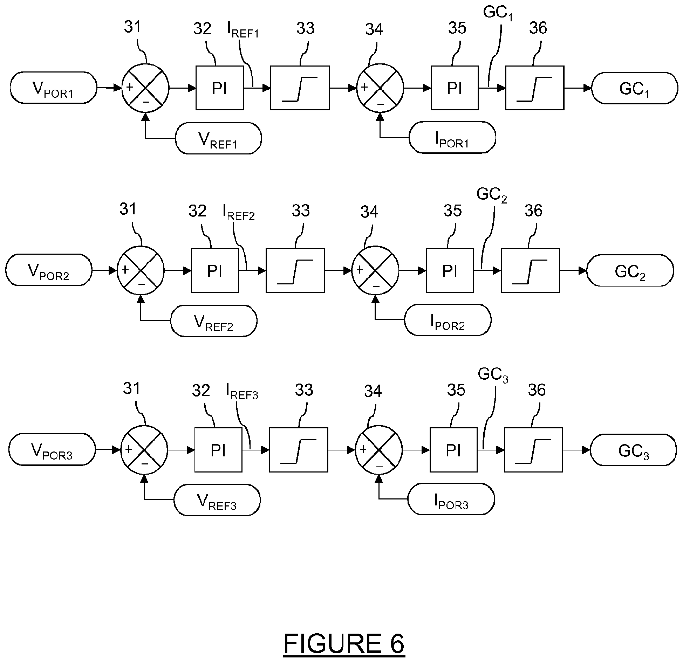

En référence à la figure 6, le procédé de régulation comporte une étape de contrôle de l'onduleur 14 dans laquelle, pour chaque branche d'entrée, la tension au point de régulation $V_{POR1}$, $V_{POR2}$, $V_{POR3}$ est comparée, par un sommateur 31, à une tension de référence prédéterminée $V_{REF1}$, $V_{REF2}$, $V_{REF3}$ afin de déterminer un écart qui est intégré, par un correcteur proportionnel intégral (correcteur PI) 32, pour déterminer une consigne de courant $I_{REF1}$, $I_{REF2}$, $I_{REF3}$.

Il va de soi qu'un autre type de correcteur pourrait être utilisé en lieu et place de l'intégrateur 32. Un tel remplacement est applicable de manière analogue aux autres correcteurs qui seront présentés par la suite. De préférence, le principe de correction ci-dessus est basé sur des valeurs de tensions et de courant instantanées. La mise en oeuvre des transformées du type Park/Clarke ou de Fortescue permettent avantageusement de réaliser la régulation sur des valeurs continues issues de ces transformées.

De manière préférée, la tension de référence $V_{REF1}$, $V_{REF2}$, $V_{REF3}$ de chaque branche d'entrée est déterminée en fonction du réseau de distribution RD. Dans cet exemple, le réseau de distribution RD est un réseau de tension 115Vrms phase/Neutre de fréquence 400Hz.

Dans cet exemple, toujours en référence à la figure 6, la consigne de courant $I_{REF1}$, $I_{REF2}$, $I_{REF3}$ est limitée, par un limiteur 33, afin que la consigne de courant $I_{REF1}$, $I_{REF2}$, $I_{REF3}$ ne dépasse pas un seuil de court-circuit prédéterminé et protège l'onduleur 14. Une telle limitation est avantageuse mais demeure optionnelle.

La consigne de courant $I_{REF\,1}$, $I_{REF\,2}$, $I_{REF\,3}$ est ensuite comparée à l'intensité au point de régulation $I_{POR1}$, $I_{POR2}$, $I_{POR3}$, par un sommateur 34 afin de déterminer un écart qui est intégré, par un correcteur proportionnel intégral (correcteur PI) 35, pour déterminer une grandeur de correction $GC_1$, $GC_2$, $GC_3$. Un autre type de correcteur pourrait être utilisé en lieu et place du correcteur proportionnel intégral 35.

Autrement dit, la grandeur de correction $GC_1$, $GC_2$, $GC_3$ est obtenue à partir d'une boucle de courant et d'une boucle de tension au cours d'une première étape de correction E1.

Dans cet exemple, toujours en référence à la figure 6, la grandeur de correction $GC_1$, $GC_2$, $GC_3$ est limitée, par un limiteur 36, afin que la grandeur de correction $GC_1$, $GC_2$, $GC_3$ ne dépasse pas un seuil de correction prédéterminé. Une telle limitation est avantageuse mais demeure optionnelle. Les grandeurs de corrections $GC_1$, $GC_2$, $GC_3$ sont obtenues par le module de correction 20 de l'unité électronique de régulation 2 qui met en oeuvre l'étape de correction E1.

En référence à la figure 4, pour chaque branche de l'onduleur 14, la grandeur de correction $GC_1$, $GC_2$, $GC_3$ est convertie par le premier module de détermination 21 en un paramètre de commande $C_{PWM1}$, CPWM2, CPWM3 afin de former un signal de régulation So de type PWM qui est transmis à l'onduleur 14 au cours d'une étape de transmission E5. Chaque paramètre de commande $C_{PWM1}$, CPWM2, CPWM3 permet de réguler de manière précise une branche de l'onduleur 14. Grâce à cette régulation, l'onduleur 14 va modifier son paramétrage afin de fournir, pour chaque branche, une tension au point de régulation $V_{POR1}$, $V_{POR2}$, $V_{POR3}$ sensiblement égale à la tension de référence $V_{REF1}$, $V_{REF2}$, $V_{REF3}$ attendue par le réseau de distribution RD. Cette régulation est autonome. Ainsi, le premier module de détermination 21 met en oeuvre une étape de détermination 21 d'un signal de régulation So.

Conformément à l'invention, afin d'améliorer la régulation, le procédé de régulation met également en oeuvre une étape de contrôle de la génératrice 11 en fonction du contrôle de l'onduleur 14. Autrement dit, le contrôle de la génératrice 11 et celui de l'onduleur 14 sont réalisés de manière synergique comme cela va être présenté dans les différents exemples de mise en oeuvre.

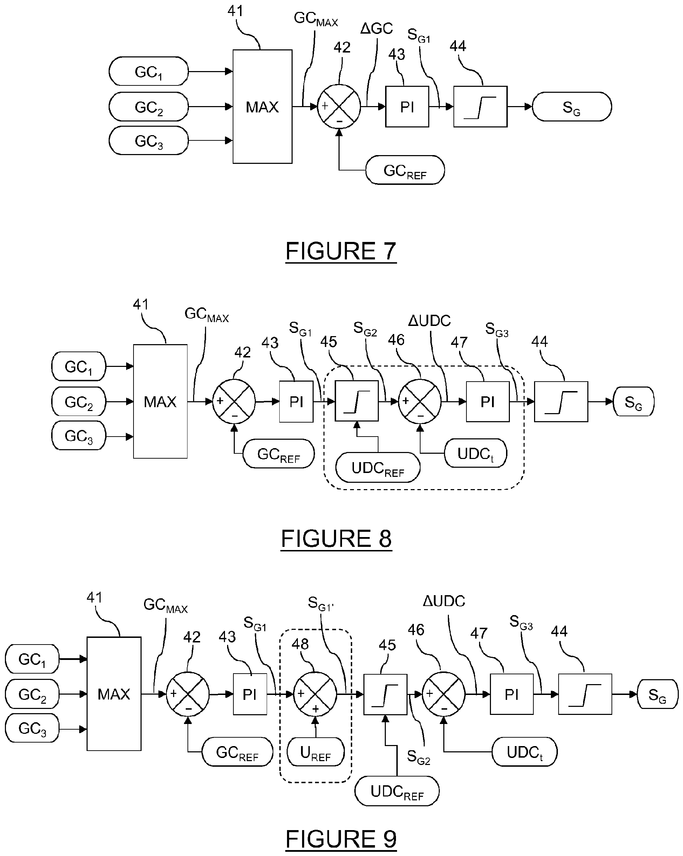

En référence à la figure 7, le procédé de régulation comporte une étape de contrôle de la génératrice 11 dans laquelle, la grandeur de correction maximale $GC_{MAX}$ est sélectionnée, par un sélecteur 41, parmi l'ensemble des grandeurs de commande $GC_1$, $GC_2$, $GC_3$ déterminées pour les branches de l'onduleur 14. Cette grandeur de correction maximale $GC_{MAX}$ représente de manière pertinente le besoin en régulation et est pertinent pour former le signal de régulation $S_G$ de la génératrice 11.

Puis, la grandeur de correction maximale $GC_{MAX}$ est comparée, par un sommateur 42, à une consigne de référence $GC_{REF}$ afin de déterminer un écart $\Delta GC$ qui est intégré, par un correcteur PI 43, pour déterminer un signal de régulation brut $S_{G1}$ qui est égal, dans cet exemple de mise en oeuvre, au signal de régulation $S_G$ permettant de commander le fonctionnement de la génératrice 11. Comme présenté précédemment, un autre type de correcteur pourrait être utilisé en lieu et place de l'intégrateur 43.

De manière préférée, la consigne de commande de référence $GC_{REF}$ est déterminée de manière à correspondre à une consigne optimale pour réguler l'onduleur 14. Autrement dit, cette consigne de référence évolue en fonction de la charge de l'onduleur 14. Ainsi, en cas de court-circuit ou de charge nulle, la régulation de la génératrice 11 est adaptée afin de prendre en compte les variations de charge vues par l'onduleur 14. L'utilisation d'une telle consigne de commande de référence $GC_{REF}$ permet de réguler la tension de bus 13 à une valeur optimale pour le fonctionnement de l'onduleur 14 ce qui permet à la fois de réduire les pertes par commutations et de limiter la masse des moyens de filtrage de l'onduleur 14 et qui peut représenter jusqu'à un tiers de la masse de l'onduleur 14.

A titre d'exemple, si la grandeur de correction maximale $GC_{MAX}$ est supérieure à la consigne de référence $GC_{REF}$, le signal de régulation $S_G$ augmente le courant d'excitation de la génératrice 11, ce qui augmente la tension du bus de tension 13. Pour obtenir une tension au point de régulation $V_{POR1}$, $V_{POR2}$, $V_{POR3}$ sensiblement égale à la tension de référence $V_{REF1}$, $V_{REF2}$, $V_{REF3}$, le signal de régulation So de l'onduleur 14 est alors réduit, ce qui diminue la valeur des grandeurs de correction $GC_1$, $GC_2$, $GC_3$ et, par voie de conséquence, la grandeur de correction maximale $GC_{MAX}$. La régulation de la tension continue par la génératrice 11 permet de faire fonctionner l'onduleur 14 à son point optimal de fonctionnement afin de limiter les pertes et la masse du filtre LC qu'il comporte en sortie.

Dans cet exemple, toujours en référence à la figure 7, le signal de régulation $S_G$ est limité, par un limiteur 44, afin que le signal de régulation $S_G$ ne dépasse pas un seuil prédéterminé. Une telle limitation est avantageuse mais demeure optionnelle.

Comme illustré à la figure 4, le signal de régulation $S_G$ est déterminé par le deuxième module de détermination 22 de l'unité électronique de régulation 2. Ainsi, le deuxième module de détermination 22 met en oeuvre une étape de détermination E3 du signal de régulation $S_G$. Le signal de régulation $S_G$ est ensuite transmis à la génératrice 11 au cours d'une étape de transmission E4.

En référence à la figure 8, le procédé de régulation comporte des étapes additionnelles qui sont localisées dans un cadre en traits discontinus sur la figure 8. Par souci de clarté et de concision, les étapes présentées dans la première mise en oeuvre de la figure 7 ne sont pas présentées de nouveau. Seules les différences entre la première mise en oeuvre de la figure 7 et la deuxième mise en oeuvre de la figure 8 sont présentées de manière détaillée.

Dans ce deuxième exemple de mise en oeuvre, le signal de régulation brut $S_{G1}$ subit des étapes de traitement afin d'améliorer sa pertinence lors de la régulation de la génératrice 11. Comme illustré à la figure 8, le signal de régulation brut $S_{G1}$ est limité, par un limiteur paramétrable 45, afin d'obtenir un signal de régulation limité $S_{G2}$ permettant de limiter la tension dans le bus de commutation 13, ce qui protège l'onduleur 14 dans les cas de court-circuit à la puissance maximum du système de génération. Le limiteur paramétrable 45 est fonction d'un seuil de référence $UDC_{REF}$ afin d'obtenir le signal de régulation limité $S_{G2}$.

Le limiteur paramétrable 45 permet de protéger l'onduleur 14 en fonction de l'état dynamique de l'onduleur 14. Il permet de limiter la tension en cas de surcharge pour limiter la puissance prélevée sur la turbomachine T et limiter les pertes de l'onduleur 14. Autrement dit, le limiteur paramétrable permet de définir la tension maximale pour la puissance maximale admissible. De manière préférée, le seuil de référence $UDC_{REF}$ est défini par la formule suivante :

$$UDC_{REF} = \frac{2 \times \sqrt{2}}{3} \times \frac{S}{I} \times \frac{1}{Ref\_cons} + \varepsilon$$

dans laquelle

- S est la puissance apparente maximum du système de génération électrique
- I est le courant maximal mesuré dans l'onduleur 14
- $\varepsilon$ est la chute de tension dans l'onduleur 14 et est déterminé en fonction des caractéristiques de l'onduleur 14.

Le limiteur paramétrable permet de brider le signal de régulation brut SG1 au seuil de référence $UDC_{REF}$. Ainsi, la puissance apparente maximum en sortie du convertisseur sera limitée à la valeur S en limitant la tension de sortie au travers la fonction de transfert de l'onduleur 14, et ceci indépendamment de l'impédance de la surcharge ou du court-circuit. La puissance fournie par le générateur 11 sera elle aussi limitée, d'autant plus que le facteur de puissance en cas de surcharge ou de court-circuit est éloigné de 1.

Grâce à ce seuil de référence $UDC_{REF}$, la tension du bus de tension 13 est optimale pour les charges « normales » tout en limitant la puissance de l'onduleur 14 en cas de surcharge et de court-circuit. De manière incidente, un tel seuil de référence UDCREF permet également de limiter la surtension au niveau du point de régulation 15 suite à l'ouverture d'une surcharge ou d'un court-circuit.

Le seuil de référence $UDC_{REF}$ évolue en fonction de la charge vue par le bus 13. Ainsi, en cas de court-circuit ou de charge nulle, la régulation de la génératrice 11 est adaptée afin de prendre en compte les variations de charge vues par le bus 13. Il permet en outre d'éviter la fourniture par la génératrice 11 d'un courant de court-circuit.

Toujours en référence à la figure 8, le procédé comporte une étape de comparaison du signal de régulation limité $S_{G2}$, à la tension courante UDCt du bus de tension 13 afin de déterminer un écart $\Delta UDC$ qui est intégré, par un correcteur PI 47, pour déterminer un signal de régulation affiné $S_{G3}$ qui est égal, dans cet exemple de mise en oeuvre, au signal de régulation $S_G$ permettant de commander le fonctionnement de la génératrice 11. Un autre correcteur pourrait être utilisé en lieu et place de l'intégrateur 47.

De manière avantageuse, en contrôlant le signal de régulation $S_G$, c'est-à-dire le courant d'excitation de la génératrice 11, on limite les tensions et les courants alternatifs en cas de surcharge, la génératrice 11 étant avantageusement bridée. Cela permet avantageusement d'éviter la génération d'une tension de forte valeur dans le bus de tension 13.

Ainsi, grâce à l'invention, en cas de charge normale du bus de tension continu 13, c'est-à-dire lorsque les demandes en tension de l'onduleur 14 sont normales, la tension dans le bus 13 est réduite, ce qui permet de limiter les pertes de commutation et, par voie de conséquence, les échauffements. En cas de surcharge inférieure à la valeur S ou de déséquilibre de la charge, la tension de bus 13 augmentera mais restera optimale pour fournir la tension voulue au point de régulation 15, et la tension de bus 13 diminuera en cas de court-circuit afin de limiter la puissance apparente en sortie de l'onduleur 14.

De manière avantageuse, du fait de la régulation améliorée, l'onduleur 14 et la génératrice 11 peuvent posséder des structures plus simples, moins massives et complexes. Aucun surdimensionnement de la génératrice 11 n'est nécessaire.

En référence à la figure 9, le procédé de régulation comporte des étapes additionnelles qui sont localisées dans un cadre en traits discontinus sur la figure 9. Par souci de clarté et de concision, les étapes présentées dans la deuxième mise en oeuvre de la figure 8 ne sont pas présentées de nouveau. Seules les différences entre la deuxième mise en oeuvre de la figure 8 et la troisième mise en oeuvre de la figure 9 sont présentées de manière détaillée.

Dans ce troisième exemple de mise en oeuvre, en sortie d'intégrateur 43, un signal additionnel $U_{REF}$ est additionné au signal de régulation brut $S_{G1}$, par un additionneur 48, de manière à faire varier sa valeur d'une valeur prédéterminée. Une telle addition est avantageuse étant donné qu'elle permet de modifier de manière pratique la valeur du signal de régulation brut $S_{G1}$, notamment, pendant les phases de démarrage et d'autotest. Les points de fonctionnement du système de génération d'énergie électrique 1 peuvent être, en outre, testés de manière pratique.

Grâce à l'invention, la tension de sortie de l'onduleur 14 et la tension de sortie de la génératrice 11 sont mieux contrôlées. La tension continue du bus 13 est avantageusement plus faible par comparaison à l'art antérieur, ce qui permet de limiter les pertes électriques dans l'onduleur 14, de limiter la masse du filtre LC de l'onduleur 14 et de réduire la génération de chaleur. Le système de génération d'énergie électrique 1 peut alors comprendre moins de dissipateurs thermiques ou des dissipateurs thermiques de plus faibles dimensions, ce qui réduit la masse du système de génération d'énergie électrique 1 de manière importante.

En outre, grâce à la régulation, il n'est plus nécessaire de surdimensionner la génératrice 11 afin qu'elle fournisse un courant de court-circuit. La masse et l'encombrement de la génératrice 11 sont alors réduits par comparaison à l'art antérieur.

Il a été présenté un système de génération pour une génératrice intégrant un redresseur mais il va de soi que l'invention s'applique plus généralement à toute source de tension continue pouvant être contrôlée.

**Revendications**

1. Procédé de régulation d'un système de génération d'énergie électrique (1) pour un réseau de distribution électrique (RD) d'un aéronef, le système de génération d'énergie électrique (1) comprenant :

   - une génératrice synchrone (11) à excitation commandée adaptée pour recevoir un couple mécanique d'une turbomachine (T) de l'aéronef et adaptée pour générer une tension électrique selon plusieurs phases,
   - un redresseur (12) placé en sortie de la génératrice synchrone (11),
   - un onduleur (14) produisant une tension selon plusieurs phases à fréquence fixe,
   - un bus de tension continue (13) reliant le redresseur (12) à l'onduleur (14),
   - un point de régulation (15) placé en sortie de l'onduleur (14) afin de fournir une tension constante en fréquence et en amplitude au réseau de distribution (RD)
   - procédé de régulation comprenant :

      i. une étape de correction (E1) dans laquelle une tension de sortie $V_{POR}$ au point de régulation (15) est comparée à une tension de référence prédéterminée $V_{REF}$ du réseau de distribution (RD) et une intensité de sortie $I_{POR}$ au point de régulation est comparée à une intensité de référence prédéterminée $I_{REF}$ du réseau de distribution (RD) de manière à déterminer au moins une grandeur de correction GC,
ii. une étape de détermination (E2) d'un signal de régulation So de l'onduleur (14) à partir de la grandeur de correction déterminée GC, **caractérisé par**
iii. une étape de détermination (E3) d'un signal de régulation $S_G$ de la génératrice (11) à partir de la grandeur de correction déterminée GC et
iv. une étape de transmission (E4, E5) des signaux de régulation So, $S_G$ à l'onduleur (14) et à la génératrice (11) respectivement.

2. Procédé de régulation selon la revendication 1 dans lequel, le signal de régulation $S_G$ de la génératrice (11) se présente sous la forme d'un courant d'excitation de la génératrice (11).

3. Procédé de régulation selon l'une des revendications 1 à 2 dans lequel, le point de régulation (15) comprenant trois branches ($B_1$, $B_2$, $B_3$), une grandeur de correction $GC_1$, $GC_2$, $GC_3$ est déterminée pour chacune des branches ($B_1$, $B_2$, $B_3$) par comparaison de la tension de sortie $V_{POR1}$, $V_{POR2}$, $V_{POR3}$ d'une branche déterminée ($B_1$, $B_2$, $B_3$) au point de régulation (15) à une tension de référence prédéterminée $V_{REF1}$, $V_{REF2}$, $V_{REF3}$ du réseau de distribution (RD) pour la branche déterminée ($B_1$, $B_2$, $B_3$).

4. Procédé de régulation selon la revendication 3 dans lequel, pour déterminer le signal de régulation $S_G$ de la génératrice (11), le procédé comporte :

   - une étape de sélection de la grandeur de correction maximale $GC_{MAX}$ parmi les grandeurs de correction $GC_1$, $GC_2$, $GC_3$ déterminées pour chacune des branches ($B_1$, $B_2$, $B_3$),
   - une étape de comparaison de la grandeur de correction maximale $GC_{MAX}$ à une consigne de référence $GC_{REF}$ afin de déterminer un écart $\Delta GC$,
   - une étape de calcul d'un signal de régulation brut $S_{G1}$ en fonction de l'écart déterminé $\Delta GC$ et
   - une étape de détermination du signal de régulation $S_G$ de la génératrice (11) en fonction du signal de régulation brut $S_{G1}$.

5. Procédé de régulation selon la revendication 4 dans lequel, pour déterminer le signal de régulation $S_G$ de la génératrice (11), le procédé comporte :

   - une étape de limitation du signal de régulation brut $S_{G1}$ en fonction d'un seuil de référence $UDC_{REF}$ du bus de tension (13) afin d'obtenir un signal de régulation limité $S_{G2}$,
   - une étape de comparaison d'un signal de régulation limité $S_{G2}$, à une mesure de la tension $UDCt$ du bus de tension (13) afin de déterminer un écart ΔUDC,

- une étape de calcul d'un signal de régulation affiné $S_{G3}$ en fonction de l'écart déterminé ΔUDC et

- une étape de détermination du signal de régulation $S_G$ de la génératrice (11) en fonction du signal de régulation affiné $S_{G3}$.

6. Procédé de régulation selon la revendication 5 dans lequel, le seuil de référence $UDC_{REF}$ du bus de tension (13) est déterminé en fonction de l'état de l'onduleur (14), en particulier, de l'intensité maximale de l'onduleur (14).

7. Procédé de régulation selon la revendication 6 dans lequel, le seuil de référence $UDC_{REF}$ du bus de tension (13) est déterminé de manière dynamique.

8. Procédé de régulation selon l'une des revendications 5 à 7 dans lequel le seuil de référence $UDC_{REF}$ est défini par la formule suivante :

$$UDC_{REF} = \frac{2\times\sqrt{2}}{3} \times \frac{S}{I} \times \frac{1}{Ref\_cons} + \varepsilon$$

dans laquelle

- S est la puissance apparente maximum du système de génération électrique (1)
- I est le courant efficace maximum mesuré dans l'onduleur (14)
- ε est la chute de tension dans l'onduleur (14).

9. Système de génération d'énergie électrique (1) pour un réseau de distribution électrique (RD) d'un aéronef, le système de génération d'énergie électrique (1) comprenant :

- une génératrice synchrone (11) à excitation commandée adaptée pour recevoir un couple mécanique d'une turbomachine (T) de l'aéronef et adaptée pour générer une tension électrique selon plusieurs phases,
- un redresseur (12) placé en sortie de la génératrice synchrone (11),
- un onduleur (14) produisant une tension selon plusieurs phases à fréquence fixe,
- un bus de tension continue (13) reliant le redresseur (12) à l'onduleur (14),
- un point de régulation (15) placé en sortie de l'onduleur (14) afin de fournir une tension constante en fréquence et en amplitude au réseau de distribution (RD) et
- une unité électronique de régulation (2), reliant le point de régulation (15) à l'onduleur (14) et à la génératrice (11), l'unité électronique de régulation (2) comprenant :

i. un module de correction (20) configuré pour comparer une tension de sortie $V_{POR}$ au point de régulation (15) à une tension de référence $V_{REF}$ du réseau de distribution (RD) et pour comparer une intensité de sortie $I_{POR}$ au point de régulation est comparée à une intensité de référence prédéterminée $I_{REF}$ du réseau de distribution de manière à déterminer au moins une grandeur de correction GC,

ii. un premier module de détermination (21) d'un signal de régulation So de l'onduleur (14) à partir de la grandeur de correction déterminée GC et **caractérisé par**

iii. un deuxième module de détermination (22) d'un signal de régulation $S_G$ de la génératrice (11) à partir de la grandeur de correction déterminée GC.

**Patentansprüche**

1. Verfahren zur Steuerung eines Systems zur Stromerzeugung (1) für ein Stromverteilungsnetz (RD) eines Fluggeräts, wobei das System zur Stromerzeugung (1) umfasst:

- einen Synchrongenerator (11) mit gesteuerter Erregung, der zum Empfangen eines mechanischen Moments einer Turbomaschine (T) des Fluggeräts geeignet ist und zum Erzeugen einer elektrischen Spannung gemäß mehreren Phasen geeignet ist,
- einen Gleichrichter (12), der am Ausgang des Synchrongenerators (11) platziert ist,
- einen Wechselrichter (14), der eine Spannung gemäß mehreren Phasen mit fester Frequenz erzeugt,
- einen Gleichspannungsbus (13), der den Gleichrichter (12) mit dem Wechselrichter (14) verbindet,
- einen Regulationspunkt (15), der am Ausgang des Wechselrichters (14) platziert ist, um dem Verteilungsnetz (RD) eine hinsichtlich Frequenz und Amplitude konstante Spannung bereitzustellen,

wobei das Steuerungsverfahren umfasst:

i. einen Korrekturschritt (E1), bei dem eine Ausgangsspannung $V_{POR}$ am Regulationspunkt (15) mit einer vorher festgelegten Referenzspannung $V_{REF}$ des Verteilungsnetzes (RD) verglichen wird und eine Ausgangsstromstärke $I_{POR}$ am Regulationspunkt mit einer vorher festgelegten Referenzstromstärke $I_{REF}$ des Verteilungsnetzes (RD) verglichen wird, so dass mindestens eine Korrekturgröße GC bestimmt wird,

ii. einen Bestimmungsschritt (E2) eines Steuerungssignals So des Wechselrichters (14) ausgehend von der bestimmten Korrekturgröße GC, **gekennzeichnet durch**

iii. einen Bestimmungsschritt (E3) eines Steuerungssignals $S_G$ des Generators (11) ausgehend von der bestimmten Korrekturgröße GC und

iv. einen Übertragungsschritt (E4, E5) der Steuerungssignale So, $S_G$ jeweils an den Wechselrichter (14) und an den Generator (11).

2. Steuerungsverfahren nach Anspruch 1, wobei das Steuerungssignal $S_G$ des Generators (11) in Form eines Erregungsstroms des Generators (11) vorliegt.

3. Steuerungsverfahren nach einem der Ansprüche 1 bis 2, wobei, wobei der Regulationspunkt (15) drei Abzweigungen ($B_1$, $B_2$, $B_3$) umfasst, eine Korrekturgröße $GC_1$, $GC_2$, $GC_3$ für jede der Abzweigungen ($B_1$, $B_2$, $B_3$) durch Vergleichen der Ausgangsspannung $V_{POR1}$, $V_{POR2}$, $V_{POR3}$ einer bestimmten Abzweigung ($B_1$, $B_2$, $B_3$) am Regulationspunkt (15) mit einer vorher festgelegten Referenzspannung $V_{REF1}$, $V_{REF2}$, $V_{REF3}$ des Verteilungsnetzes (RD) für die bestimmte Abzweigung ($B_1$, $B_2$, $B_3$) bestimmt wird.

4. Steuerungsverfahren nach Anspruch 3, wobei das Verfahren zur Bestimmung des Steuerungssignals $S_G$ des Generators (11) aufweist:

- einen Auswahlschritt der maximalen Korrekturgröße $GC_{MAX}$ aus den für jede der Abzweigungen ($B_1$, $B_2$, $B_3$) bestimmten Korrekturgrößen $GC_1$, $GC_2$, $GC_3$,
- einen Vergleichsschritt der maximalen Korrekturgröße $GC_{MAX}$ mit einem Referenzsollwert $GC_{REF}$, um eine Abweichung $\Delta GC$ zu bestimmen,
- einen Berechnungsschritt eines Roh-Steuerungssignals $S_{G1}$ in Abhängigkeit von der bestimmten Abweichung $\Delta GC$ und
- einen Bestimmungsschritt des Steuerungssignals $S_G$ des Generators (11) in Abhängigkeit vom Roh-Steuerungssignal $S_{G1}$.

5. Steuerungsverfahren nach Anspruch 4, wobei das Verfahren zur Bestimmung des Steuerungssignals $S_G$ des Generators (11) aufweist:

- einen Begrenzungsschritt des Roh-Steuerungssignals $S_{G1}$ in Abhängigkeit von einem Referenzgrenzwert $UDC_{REF}$ des Spannungsbus (13), um ein begrenztes Steuerungssignal $S_{G2}$ zu erhalten,
- einen Vergleichsschritt eines begrenzten Steuerungssignals $S_{G2}$ mit einer Messung der Spannung UDCt des Spannungsbus (13), um eine Abweichung $\Delta UDC$ zu bestimmen,
- einen Berechnungsschritt eines verfeinerten Steuerungssignals $S_{G3}$ in Abhängigkeit von der bestimmten Abweichung $\Delta UDC$ und
- einen Bestimmungsschritt des Steuerungssignals $S_G$ des Generators (11) in Abhängigkeit vom verfeinerten Steuerungssignal $S_{G3}$.

6. Steuerungsverfahren nach Anspruch 5, wobei der Referenzgrenzwert $UDC_{REF}$ des Spannungsbus (13) in Abhängigkeit vom Zustand des Wechselrichters (14), vor allem von der maximalen Stärke des Wechselrichters (14), bestimmt wird.

7. Steuerungsverfahren nach Anspruch 6, wobei der Referenzgrenzwert $UDC_{REF}$ des Spannungsbus (13) dynamisch bestimmt wird.

8. Steuerungsverfahren nach einem der Ansprüche 5 bis 7, wobei der Referenzgrenzwert $UDC_{REF}$ durch die folgende Formel definiert ist:

$$UDC_{REF} = \frac{2 \times \sqrt{2}}{3} \times \frac{S}{I} \times \frac{1}{Ref\_cons} + \varepsilon$$

wobei

- S die maximale Scheinleistung des Stromerzeugungssystems (1) ist,
- I der maximale effektive Strom ist, der im Wechselrichter (14) gemessen wird,
- $\varepsilon$ der Spannungsabfall im Wechselrichter (14) ist.

9. System zur Stromerzeugung (1) für ein Stromverteilungsnetz (RD) eines Fluggeräts, wobei das System zur Stromerzeugung (1) umfasst:

- einen Synchrongenerator (11) mit gesteuerter Erregung, der zum Empfangen eines mechanischen Moments einer Turbomaschine (T) des Fluggeräts geeignet ist und zum Erzeugen einer elektrischen Spannung gemäß mehreren Phasen geeignet ist,
- einen Gleichrichter (12), der am Ausgang des Synchrongenerators (11) platziert ist,
- einen Wechselrichter (14), der eine Spannung gemäß mehreren Phasen mit fester Frequenz erzeugt,
- einen Gleichspannungsbus (13), der den Gleichrichter (12) mit dem Wechselrichter (14) verbindet,
- einen Regulationspunkt (15), der am Ausgang des Wechselrichters (14) platziert ist, um dem Verteilungsnetz (RD) eine hinsichtlich Frequenz und Amplitude konstante Spannung bereitzustellen, und
- eine elektronische Steuerungseinheit (2), die den Regulationspunkt (15) mit dem Wechselrichter (14) und mit dem Generator (11) verbindet, wobei die elektronische Steuerungseinheit (2) umfasst:

i. ein Korrekturmodul (20), das ausgelegt ist, um eine Ausgangsspannung $V_{POR}$ am Regulationspunkt (15) mit einer Referenzspannung $V_{REF}$ des Verteilungsnetzes (RD) zu vergleichen und um eine Ausgangsstromstärke $I_{POR}$ am Regulationspunkt mit einer vorher festgelegten Referenzstromstärke $I_{REF}$ des Verteilungsnetzes (RD) zu vergleichen, so dass mindestens eine Korrekturgröße GC bestimmt wird,

ii. ein erstes Bestimmungsmodul (21) eines Steuerungssignals So des Wechselrichters (14) ausgehend von der bestimmten Korrekturgröße GC und **gekennzeichnet durch**

iii. ein zweites Bestimmungsmodul (22) eines Steuerungssignals $S_G$ des Generators (11) ausgehend von der bestimmten Korrekturgröße GC.

**Claims**

1. A method for regulating an electric power generation system (1) for an electrical distribution network (RD) of an aircraft, the electric power generation system (1) comprising:

- a synchronous generator (11) with controlled excitation adapted to receive mechanical torque from a turbomachine (T) of the aircraft and adapted to generate an electric voltage at several phases,
- a rectifier (12) placed at the output of the synchronous generator (11),
- an inverter (14) producing a voltage at several phases at a fixed frequency,
- a DC voltage bus (13) connecting the rectifier (12) to the inverter (14),
- a point of regulation (15) placed at the output of the inverter (14) in order to supply a voltage with constant frequency and amplitude to the distribution network (RD)
- which regulation method comprises:

i. a correction step (E1) in which an output voltage $V_{POR}$ at the point of regulation (15) is compared with a predetermined reference voltage $V_{REF}$ of the distribution network (RD) and an output current $I_{POR}$ at the point of regulation is compared with a predetermined reference current $I_{REF}$ of the distribution network (RD) so as to determine at least one correction quantity GC,

ii. a step (E2) of determining a regulation signal So of the inverter (14) from the correction quantity GC determined, **characterized by**

iii. a step (E3) of determining a regulation signal $S_G$ of the generator (11) from the correction quantity GC determined and

iv. a step (E4, E5) of transmitting the regulation signals So, $S_G$ to the inverter (14) and the generator (11) respectively.

2. The regulation method according to claim 1 wherein the regulation signal $S_G$ of the generator (11) is in the form of an excitation current of the generator (11).

3. The regulation method according to one of the claims 1 to 2, wherein, the point of regulation (15) comprising three branches ($B_1$, $B_2$, $B_3$), a correction quantity $GC_1$, $GC_2$, $GC_3$ is determined for each of the branches ($B_1$, $B_2$, $B_3$) by comparing the output voltage $V_{POR1}$, $V_{POR2}$, $V_{POR3}$ of a given branch ($B_1$, $B_2$, $B_3$) at the point of regulation (15) with a predetermined reference voltage $V_{REF1}$, $V_{REF2}$, $V_{REF3}$ of the distribution network (RD) for the determined branch ($B_1$, $B_2$, $B_3$).

4. The regulation method according to claim 3 wherein, for determining the regulation signal $S_G$ of the generator (11), the method comprises:

- a step of selecting the maximum correction quantity $GC_{MAX}$ from the correction quantities $GC_1$, $GC_2$, $GC_3$ determined for each of the branches ($B_1$, $B_2$, $B_3$),
- a step of comparing the maximum correction quantity $GC_{MAX}$ with a reference setpoint $GC_{REF}$ to determine a deviation $\Delta GC$,
- a step of calculating a raw regulation signal SG1 according to the deviation $\Delta GC$ determined and
- a step of determining the regulation signal $S_G$ of the generator (11) according to the raw regulation signal $SG_1$.

5. The regulation method according to claim 4 wherein, for determining the regulation signal $S_G$ of the generator (11), the method comprises:

- a step of limiting the raw regulation signal $S_{G1}$ according to a reference threshold $UDC_{REF}$ of the voltage bus (13) in order to obtain a limited regulation signal $S_{G2}$,
- a step of comparing a limited regulation signal $S_{G2}$ with a measurement of the voltage UDCt of the voltage bus (13) to determine a deviation ΔUDC,

- a step of calculating a refined regulation signal $S_{G3}$ according to the deviation ΔUDC determined, and

- a step of determining the regulation signal $S_G$ of the generator (11) according to the refined regulation signal $S_{G3}$.

6. The regulation method according to claim 5, wherein the reference threshold $UDC_{REF}$ of the voltage bus (13) is determined according to the state of the inverter (14), in particular the maximum current of the inverter (14).

7. The regulation method according to claim 6, wherein the reference threshold $UDC_{REF}$ of the voltage bus (13) is determined dynamically.

8. The regulation method according to one of the claims 5 to 7, wherein the reference threshold $UDC_{REF}$ is defined by the following formula:

$$UDC_{REF} = \frac{2 \times \sqrt{2}}{3} \times \frac{S}{I} \times \frac{1}{Ref\_cons} + \varepsilon$$

in which

- S is the maximum apparent power of the power generation system (1)
- I is the maximum rms current measured in the inverter (14)
- ε is the voltage drop in the inverter (14).

9. An electric power generation system (1) for an electrical distribution network (RD) of an aircraft, the electric power generation system (1) comprising:

- a synchronous generator (11) with controlled excitation adapted to receive mechanical torque from a turbomachine (T) of the aircraft and adapted to generate an electric voltage at several phases,
- a rectifier (12) placed at the output of the synchronous generator (11),
- an inverter (14) producing a voltage at several phases with a fixed frequency,
- a DC voltage bus (13) connecting the rectifier (12) to the inverter (14),
- a point of regulation (15) placed at the output of the inverter (14) in order to provide a voltage with constant frequency and amplitude to the distribution network (RD), and
- an electronic regulation unit (2), connecting the point of regulation (15) to the inverter (14) and to the generator (11), the electronic regulation unit (2) comprising:

i. a correction module (20) configured to compare an output voltage $V_{POR}$ at the point of regulation (15) with a reference voltage $V_{REF}$ of the distribution network (RD) and to compare an output current $I_{POR}$ at the point of regulation is compared with a predetermined reference current $I_{REF}$ of the distribution network in order to determine at least one correction quantity GC,

ii. a first module (21) for determining a regulation signal So of the inverter (14) from the correction quantity GC determined and **characterized by**

iii. a second module (22) for determining a regulation signal $S_G$ of the generator (11) from the correction quantity GC determined.

## FIGURE 1

## FIGURE 2

EP 3 827 512 B1

FIGURE 3

FIGURE 4

15

$I_{POR}$     $V_{POR}$

E1 ← $V_{REF}$

GC

E2          E3

$S_G$          $S_O$

E4          E5

11          14

## FIGURE 5

FIGURE 6

FIGURE 7

FIGURE 8

FIGURE 9

## RÉFÉRENCES CITÉES DANS LA DESCRIPTION

**Documents brevets cités dans la description**

- EP 0376728 A2
- WO 2012123663 A
- US 4937723 A

**Littérature non-brevet citée dans la description**

- VSCF Aircraft Electric Power System Performance with Active Power Filters. *IEEE 978-1-4244-5692-5*